Europäisches Patentamt

European Patent Office

Office européen des brevets

(11) Veröffentlichungsnummer: **0 416 169 A2**

## (12) EUROPÄISCHE PATENTANMELDUNG

(21) Anmeldenummer: **89120337.4**

(22) Anmeldetag: **03.11.89**

(51) Int. Cl.5: **G02B 6/36**, G02B 6/42, G02B 6/38

(30) Priorität: **08.09.89 DE 3929944**

(43) Veröffentlichungstag der Anmeldung:
**13.03.91 Patentblatt 91/11**

(84) Benannte Vertragsstaaten:
**CH FR GB IT LI SE**

(71) Anmelder: **Hommelwerke GmbH
Alte Tuttlinger Strasse 20
W-7730 VS-Schwenningen(DE)**

(72) Erfinder: **Wehrle, Klaus**

Römerstrasse 11
**W-7734 Brigachtal(DE)**
Erfinder: **Jakober, Bernd**
**Im Brotkörble 33**
**W-7730 VS-Mühlhausen(DE)**

(74) Vertreter: **Leine, Sigurd, Dipl.-Ing. et al
Dipl.-Ing. Sigurd Leine Dipl.-Phys. Dr.
Norbert König Patentanwälte
Burckhardtstrasse 1
W-3000 Hannover 1(DE)**

(54) Vorrichtung zur Kopplung von Lasern, Dioden oder dergleichen mit lichtleitenden Fasern oder solchen Fasern untereinander.

(57) Vorrichtung zur Kopplung von Lasern, Dioden oder dergleichen untereinander oder mit lichtleitenden Fasern oder solcher Fasern untereinander, mit zwei Haltekörpern zum Halten jeweils eines Lasers, einer Diode oder einer Faser in Richtung einer optischen Achse. Zwischen den beiden Haltekörpern ist ein Zwischenkörper angeordnet, der mit einem der beiden Haltekörper in Richtung der optischen Achse geführt durch Gleitflächen verschieblich verbunden und mit einer sich senkrecht zur optischen Achse erstreckenden Anlagefläche an einer sich ebenfalls senkrecht zur optischen Achse erstreckenden Fläche an dem anderen der beiden Haltekörper in alle Richtungen dieser Flächen verschieblich anliegt. Durch die exakten Anlageflächen ist eine genaue Justierung möglich. Durch Kapillarwirkung läßt sich dünner Klebstoff zwischen die Anlageflächen bringen und so eine sehr exakte Fixierung der Halteteile und damit der optischen Teile zueinander erreichen.

FIG.4

EP 0 416 169 A2

## VORRICHTUNG ZUR KOPPLUNG VON LASERN, DIODEN ODER DERGLEICHEN MIT LICHTLEITENDEN FASERN ODER SOLCHEN FASERN UNTEREINANDER

Die Erfindung betrifft eine Vorrichtung der im Oberbegriff des Anspruchs 1 genannten Art zur Kopplung von Lasern, Dioden oder dergleichen mit lichtleitenden Fasern oder solchen Fasern untereinander.

Zur Einkopplung eines Laserstrahls eines Halbleiterlasers in einen Monomode-Lichtwellenleiter sind verschiedene Anordnungen bekannt. Eine besteht darin, ein verjüngtes Ende einer Faser mit einer angeschmolzenen Linse unmittelbar mit einer Laserdiode zu verbinden. Eine zweite bekannte Vorrichtung besteht darin, eine Faser über eine Gradientenlinse (GRIN) und eine Kugellinse mit der Laserdiode zu koppeln. Schließlich besteht eine weitere Anordnung darin, das Ende der Faser über eine Koppeloptik mit zwei Kugellinsen mit der Laserdiode zu koppeln.

Alle diese Vorrichtungen haben den Nachteil, daß sie schwer zu justieren sind, da der aktive Durchmesser von Einmodenfasern kleiner als 10 μm ist. Sind die Justiertoleranzen noch geringer, so vergrößern sich entsprechend die Justierschwierigkeiten.

An sich bekannte Justieranordnungen mit mechanisch überbestimmten Schraubverbindungen sind im Submikrometerbe reich schwer handhabbar und außerdem für mikrotechnische Anwendungen zu voluminös. Es ist auch bekannt, Halbleiterlaser und Planarwellenleiter unmittelbar zu verkleben. Durch Schrumpfungen beim Aushärten gehen die genauen Justierungen wieder verloren. Schrumpfarme Kleber haben hohe Füllstoffanteile, sind sehr zähflüssig und daher kaum geeignet, Kleinteile in Form von Laserdioden, Fasern und dergleichen ohne Nachteile für die Justage durch Klebstoff zu verbinden. Auch mit UV-Licht polimerisierende Klebestoffe, die vor der Justierung aufgebracht werden können, erfüllen nicht die sehr hohen Anforderungen an die Steifigkeit der Klebeverbindung.

Der Erfindung liegt die Aufgabe zugrunde, eine Vorrichtung der betreffenden Art zur Kopplung von Lasern, Dioden oder dergleichen mit lichtleitenden Fasern oder solchen Fasern untereinander zu schaffen, die eine Justage der Kopplung mit hoher Genauigkeit und eine Fixierung durch Klebstoff ohne Einfluß auf die Justage ermöglicht.

Die der Erfindung zugrundeliegende Aufgabe wird durch die im Kennzeichen des Anspruchs 1 angegebene Lehre gelöst.

Grundgedanke der erfindungsgemäßen Lehre ist es, exakte Gleitflächen zur Führung sowohl in Richtung der optischen Achse als auch in allen Richtungen senkrecht dazu zu schaffen, die bei entsprechender Anlage aneinander nicht nur eine einfache Justage ermöglichen, sondern auch die Justierstellungen aufgrund von Reibkräften zwischen den Anlageflächen aufrechterhalten, wenn die Teile nach der Justage durch Klebstoff miteinander verbunden werden. Wird ausreichend dünner Klebstoff verwendet, so fließt dieser aufgrund von Kapillarwirkung in den sehr engen Zwischenraum zwischen den aneinanderliegenden Flächen und verteilt sich dort optimal. Wird dabei sehr schnell härtender Klebstoff verwendet, so ist die Fixierung der Justierstelle schon in wenigen Sekunden erreicht.

Die Justage kann natürlich unter Zuhilfenahme von Hilfsmitteln erfolgen, die zumindest kurzzeitig die Justierlage aufrechterhalten. Nach Einbringung des Klebstoffs wird lage aufrechterhalten. Nach Einbringung des Klebstoffs wird dann die Justierlage fixiert. Die die optischen Elemente wie Laser, Dioden, Fasern oder dergleichen haltenden Halteteile können somit äußerst klein sein, sie eignen sich für eine automatische Justage, und die Fixierung ist äußerst beständig. Die miteinander zu koppelnden optischen Elemente können grundsätzlich beliebiger Art sein. Die erfindungsgemäße Vorrichtung ist immer dort zweckmäßig, wo solche optischen Elemente in Richtung einer optischen Achse und in allen Richtungen senkrecht dazu ausgerichtet, justiert und fixiert werden müssen.

Nach der Lehre des Anspruchs 2 sind die die axiale Führung bewirkenden Gleitflächen teilweise zylindrisch, sie bilden so eine teleskopartige Führung. Eine derartige Ausführungsform läßt sich fertigungsmäßig besonders einfach und genau herstellen. Grundsätzlich ist es dabei beliebig, an welchem Teil sich die Innenflächen und die Außenflächen befinden. Zweckmäßig ist es jedoch, daß die Gleitfläche an dem einen Haltekörper eine Außenfläche und die Gleitfläche an dem Zwischenkörper eine Innenfläche ist. Um die Zugänglichkeit zu dem Anlagebereich zwischen den Gleitflächen zu schaffen, um Klebstoff einzubringen, ist es zweckmäßig, in dem außenliegenden Teil bis zu den Grenzflächen wenigstens einen Durchbruch vorzusehen.

Der Haltekörper kann zur Halterung einer lichtleitenden Faser eine Bohrung aufweisen, in der diese Faser ganz einfach eingesteckt und fixiert wird.

Nach einer besonders zweckmäßigen Weiterbildung gemäß Anspruch 6 weist der Haltekörper für einen Laser in Richtung der optischen Achse vor dem Laser einen Hohlraum zum Einsetzen optischer Elemente insbesondere eines Interferometers auf. Zweckmäßig ist dabei eine Weiterbildung dieser Ausführungsform, nach der ein zweiter Zwischenkörper vorgesehen ist, der dem anderen Zwischenkörper zugeordnet und in gleicher Weise wie der dem einen Haltekörper zugeordnete Zwischenkörper in Richtung der optischen Achse zu dem anderen Haltekörper verschieblich ist, wobei zwischen den beiden Zwischenkörpern ein Aufnahmekörper angeordnet ist, der zwei parallele Anlageflächen aufweist, an denen die Anlageflächen der Zwischenkörper verschieblich anliegen und zwischen denen sich ein Hohlraum zur Aufnahme optischer Elemente befindet. Es ist somit zu beiden Seiten der in dem Aufnahmekörper vorgesehenen optischen Anordnung eine Justage einer lichtleitenden Faser sowohl in Richtung der optischen Achse als auch in allen Richtungen senkrecht dazu möglich.

In allen Fällen ist es zweckmäßig, daß der Abstand zwischen den zu koppelnden optischen Elementen möglichst gering ist, um Streuungen im Übergangsbereich zwischen den Elementen nicht nachteilig in Erscheinung treten zu lassen, es sei denn, daß zusätzlich optische Elemente wie beispielsweise Linsen oder dergleichen zur Vermeidung dieser Nachteile vorgesehen sind.

Anhand der Zeichnung soll die Erfindung im einzelnen näher erläutert werden.

Fig. 1 bis 3 zeigen in auseinandergezogener Darstellung und

Fig. 4 in zusammengesetzter Form ein Ausführungsbeispiel der erfindungsgemäßen Anordnung zur Kopplung zweier lichtleitender Fasern,

Fig. 5 bis 9 zeigen in auseinandergezogener Darstellung und

Fig. 10 in zusammengesetzter Form ein Ausführungsbeispiel einer Vorrichtung zur Kopplung zweier lichtleitender Fasern mit einem dazwischenliegenden Hohlraum zur Aufnahme eines optischen Elements,

Fig. 11 bis 13 zeigen in auseinandergezogener Darstellung und

Fig. 14 in zusammengesetzter Form ein Ausführungsbeispiel zur Kopplung einer lichtleitenden Faser mit einem Laser mit einem dazwischenliegenden Hohlraum zur Anordnung eines optischen Elements,

Fig. 15 bis 17 zeigen in auseinandergezogener Darstellung und

Fig. 18 in zusammengesetzter Form ein Ausführungsbeispiel einer Vorrichtung zur Ankopplung von Lasern und/oder Dioden an ein optisches Element.

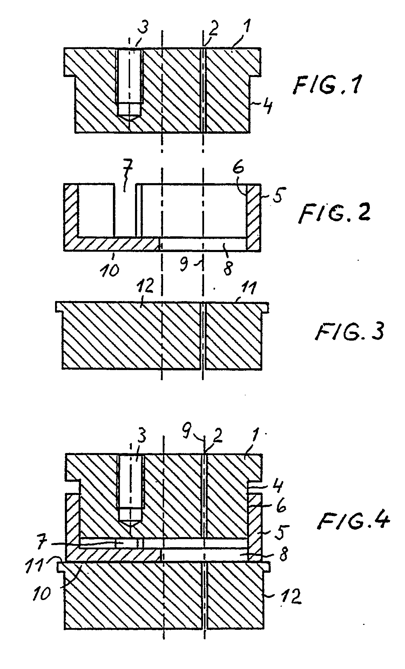

Fig. 1 zeigt einen Haltekörper 1, durch den sich eine Bohrung 2 zur Aufnahme einer nicht dargestellten, lichtleitenden Faser erstreckt und in dem sich ein Gewindesackloch 3 für eine Schraube zum Anbringen von Halterungen oder dergleichen befindet. Der Haltekörper 1 weist eine zylindrische Außenfläche 4 auf.

Fig. 2 zeigt einen Zwischenkörper 5, dessen zylindrische Innenfläche 6 mit enger Toleranz und einem Innendurchmesser dem Außendurchmesser der zylindrischen Außenfläche 4 des Haltekörpers 1 entspricht, so daß der Haltekörper 1 teleskopartig in dem Zwischenkörper 5 verschiebbar ist. Im Bereich der Innenfläche 6 befinden sich Durchbrüche 7, um so von außen her eine Zugänglichkeit zu der Außenfläche 4 des eingeschobenen Haltekörpers 1 zu schaffen, um später Klebstoff zwischen die Flächen 4 und 6 bringen zu können. In dem Zwischenkörper 5 befindet sich außerdem ein Durchbruch 8, um den Durchtritt von Licht entlang einer durch eine gestrichelte Linie angedeuteten optischen Achse 9 zu ermöglichen. Außerdem weist der Zwischenkörper 5 eine Anlagefläche 10 zur Anlage an einer Anlagefläche 11 eines weiteren Haltekörpers 12 auf, in dem sich eine Bohrung 13 zur Einführung des Endes einer nicht dargestellten lichtleitenden Faser befindet.

Fig. 4 zeigt die in den Fig. 1 bis 3 dargestellten Teile in zusammengesetzter, justierter Lage. Die axiale seiner Außenfläche 4 innerhalb der zylindrischen Innenfläche 6 des Zwischenkörpers 5, während eine Justage senkrecht zu der optischen Achse 9 durch seitliches Verschieben des Zwischenkörpers 5 in bezug zu dem Haltekörper 12 erfolgt, wobei die Anlageflächen 10 und 11 aufeinander gleiten. Die Fixierung der Anordnung erfolgt durch Einbringen von dünnflüssigem Klebstoff in dem Bereich zwischen den Anlageflächen 4 und 6 in der Zeichnung von oben her und/oder durch den Durchbruch 7.

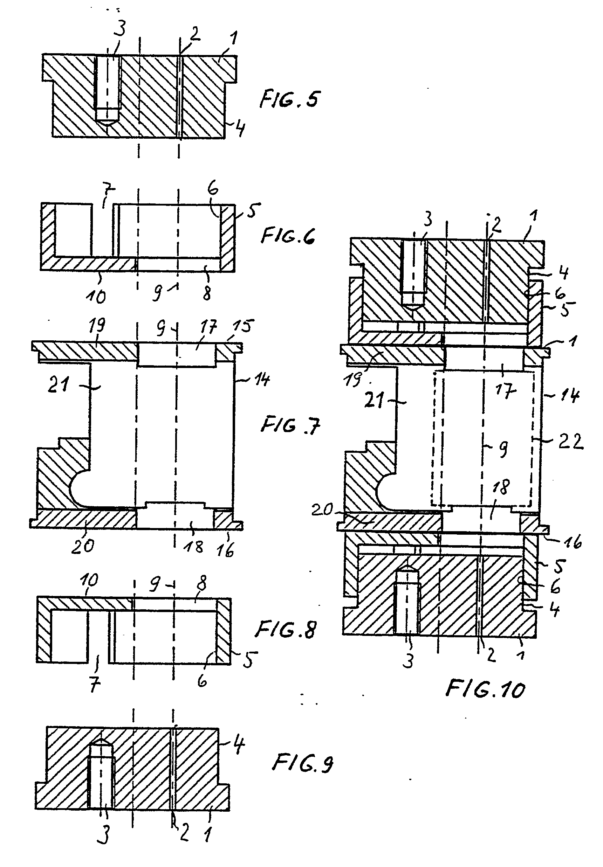

Bei dem in den Fig. 5 bis 9 in auseinandergezogener und in der Fig. 10 zusammengesetzter Form dargestellten Ausführungsbeispiel sind zum Teil die gleichen Teile vorhanden wie bei dem Ausführungsbeispiel gemäß den Fig. 1 bis 4. Gleiche Teile sind mit gleichen Bezugsziffern versehen. Die Fig. 5 und 9 zeigen jeweils in umgekehrter Lage Halteteile 1. Die Fig. 6 und 8 zeigen in umgekehrter Lage Zwischenkörper 5. Neu ist ein Aufnahmekörper 14, der zwei gegenüberliegende parallele Anlageflächen 15 und 16 für die Anlageflächen 10 der beiden Zwischenkörper 5 aufweist. Den Lichtdurchtritt entlang der optischen Achse 9 ermöglichen Durchbrüche 17 unde 18 innerhalb von plattenförmigen Teilen 19 und 20, zwischen denen sich innerhalb des Aufnahmekörpers 14 ein Hohlraum 21 zur Aufnahme eines optischen Elements 22 befindet, an das Lichtleiter in den Haltekörpern 1 und 2 angekoppelt werden sollen.

Fig. 10 zeigt die Teile gemäß den Fig. 5 bis 9 in zusammengesetzter Darstellung. Die Ausrichtung der lichtleitenden Faser, die sich in dem in Fig. 10 oben dargestellten Haltekörper 1 befindet, erfolgt in gleicher Weise wie bei dem Ausführungsbeispiel nach Fig. 4, wobei statt der Anlagefläche 11 des Haltekörpers 12 die Anlagefläche 15 wirksam ist. Auf der Unterseite ist entsprechend die Anlage 16 wirksam, auf der die Anlagefläche 10 des unteren Zwischenkörpers 5 verschieblich anliegt. Justage und Fixierung erfolgen wie bei dem Ausführungsbeispiel gemäß den Fig. 1 bis 4.

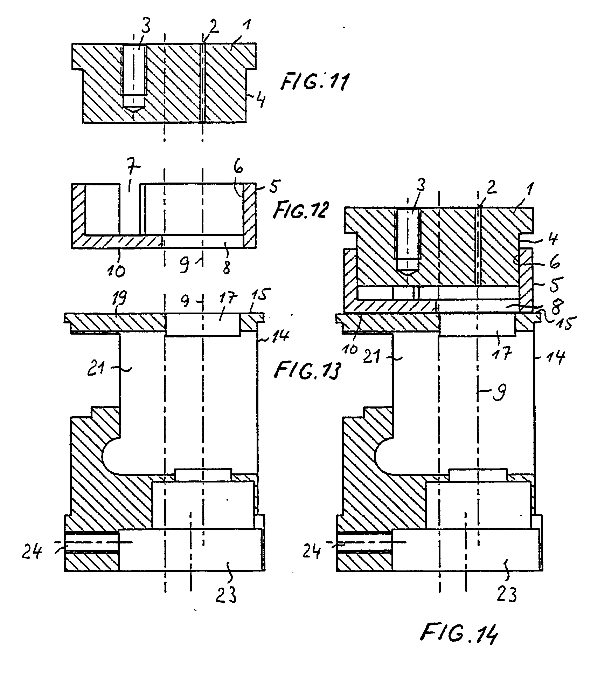

Fig. 11 bis 13 zeigen in auseinandergezogener Darstellung und Fig. 14 in zusammengesetzter Form ein Ausführungsbeispiel, das weitgehend dem gemäß den Fig. 5 bis 10 entspricht. Gleiche bzw. sich entsprechende Teile sind mit gleichen Bezugsziffern versehen. Ein Unterschied besteht darin, daß der untere Teil des Aufnahmekörpers 14 dicker ausgebildet und mit einer Aufnahme 23 für einen nicht dargestellten Laser, eine Diode oder dergleichen versehen ist. Diese optischen Elemente können in der Aufnahme 23 mit Hilfe einer nicht dargestellten Klemmschraube festklemmbar sein, die in ein Gewindeloch 24 einschraubbar ist.

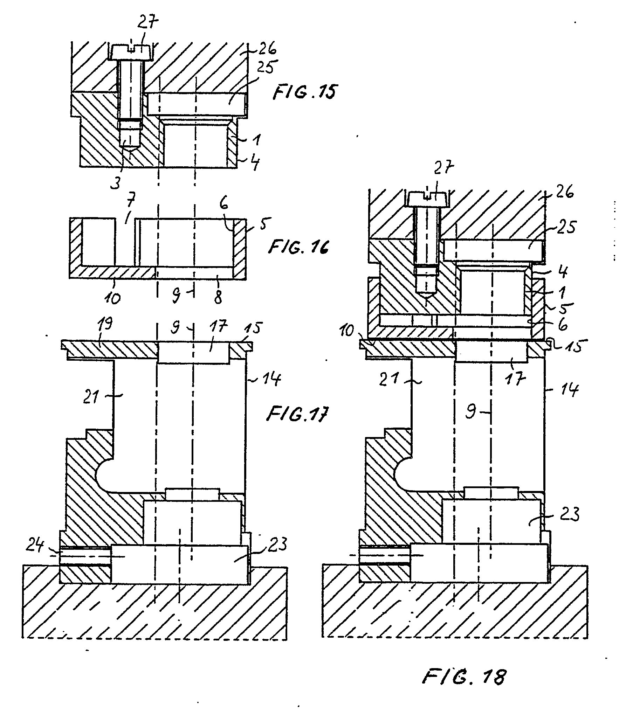

Das in den Fig. 15 bis 18 dargestellte Ausführungsbeispiel entspricht weitgehend dem in Fig. 14. Gleiche oder sich entsprechende Teile sind mit gleichen Bezugsziffern versehen. Ein Unterschied besteht darin, daß in dem Haltekörper 1 nicht eine Bohrung 2 für einen Lichtleiter vorgesehen ist, sondern eine Aufnahme 25 zur Anbringung einer nicht dargestellten Laserdiode, die im Haltekörper 1 fixiert wird. Zur Aufnahme von Haltekörper 1 in einer Justiervorrichtung 26 wird dieser mit einer in das Gewindesackloch 3 eingeschraubten Schraube 27 befestigt.

**Ansprüche**

1. Vorrichtung zur Kopplung von Lasern, Dioden oder dergleichen mit lichtleitenden Fasern oder solchen Fasern oder Elementen untereinander, mit zwei Haltekörpern zum Halten jeweils eines Lasers oder einer Faser in Richtung einer optischen Achse, **dadurch gekennzeichnet,** daß zwischen den beiden Haltekörpern (1, 12) ein Zwischenkörper (5) angeordnet ist, der mit einem der beiden Haltekörper (1) in Richtung der optischen Achse (9)geführt durch Gleitflächen (4, 6) verschieblich verbunden und mit einer sich senkrecht zur optischen Achse (9) erstreckenden Anlagefläche (10) an einer sich ebenfalls senkrecht zur optischen Achse (9) erstreckenden Fläche (11) an dem anderen der beiden Haltekörper (12) in alle Richtungen dieser Flächen (10, 11) verschieblich anliegt.

2. Vorrichtung nach Anspruch 1, **dadurch gekennzeichnet,** daß die Gleitflächen (4, 6) wenigstens teilweise zylindrisch sind und eine teleskopartige Führung bilden.

3. Vorrichtung nach Anspruch 1, **dadurch gekennzeichnet,** daß die Gleitfläche an dem einen Haltekörper (1) eine Außenfläche (4) und die Gleitfläche an dem Zwischenkörper (5) eine Innenfläche (6) ist.

4. Vorrichtung nach Anspruch 3, **dadurch gekennzeichnet,** daß der Zwischenkörper (5) wenigstens einen seitlichen, sich bis zu der Außenfläche (4) des einen Haltekörpers (1) erstreckenden Durchbruch (7), vorzugsweise einen zur optischen Achse (9) parallelen Schlitz aufweist.

5. Vorrichtung nach Anspruch 1, **dadurch gekennzeichnet,** daß der Haltekörper (1) für eine optische Faser eine Bohrung (2) zur Aufnahme der Faser aufweist.

6. Vorrichtung nach Anspruch 1, **dadurch gekennzeichnet,** daß der Haltekörper für einen Laser in Richtung der optischen Achse (9) vor dem Laser einen Hohlraum (21) zum Einsetzen eines optischen Elements (22), insbesondere eines Interferometers, aufweist.

7. Vorrichtung nach Anspruch 1, **dadurch gekennzeichnet,** daß ein zweiter Zwischenkörper (5, Fig. 8) vorgesehen ist, der dem anderen Haltekörper (1, Fig. 9) zugeordnet und in gleicher Weise wie der dem einen Haltekörper (1, Fig. 5) zugeordnete Zwischenkörper (5, Fig. 6) in Richtung der optischen Achse (9) zu dem anderen Haltekörper (1, Fig. 9) verschieblich ist, und daß zwischen den beiden Zwischenkörpern (5, Fig. 6 und 9) ein Aufnahmekörper (14) angeordnet ist, der zwei zueinander parallele und zu der optischen Achse (9) senkrechte Anlageflächen (15, 16) aufweist, an denen die Anlageflächen (10) der Zwischenkörper (5, Fig. 6 und 8) verschieblich anliegen und zwischen denen sich ein Hohlraum (21) zur Aufnahme eines optischen Elements (22) befindet.

FIG.1

FIG.2

FIG.3

FIG.4

FIG.5

FIG.6

FIG.7

FIG.8

FIG.9

FIG.10

FIG. 11

FIG. 12

FIG. 13

FIG. 14

7

FIG.15

FIG.16

FIG.17

FIG.18